# EUROPEAN PATENT APPLICATION

(11) **EP 4 760 625 A1**
(43) Date of publication of application: **17.06.2026**
(21) Application number: 25218172.2
(22) Date of filing: 25.11.2025
(51) Int. Cl.: G06Q 50/06, G06Q 10/04, G06Q 10/06, G06Q 50/02, G06Q 50/04, G06Q 50/08, H02J 3/14, H02J 3/17

(54) **MOBILE DIESEL MACHINERY ENERGY INTERVAL MANAGEMENT**

(30) Priority: 16.12.2024 US 202418982955
(71) Applicant: Caterpillar, Inc., Peoria, IL 61629-6450 (US)
(72) Inventor: CRABB, David, 1197 Prangins (CH)
(74) Representative: Klang, Alexander H.

(57) **Abstract**

This disclosure describes systems (100) and methods (600) for monitoring and evaluating energy consumption (128) at a worksite across types of machinery including mobile and stationary machinery (102, 104, 108, 150) as well as across energy types consumed by each of the types of machines. The systems (100) and methods (600) provide for aggregating fuel-based (302) and electricity-based (304) energy consumption as determined from sensor systems (110, 114, 138, 152) of machines at a worksite. The systems (100) further provide for control of operations at a worksite to achieve one or more objectives.

## Description

### Technical Field

The present application relates to power/energy tracking and management at industrial and commercial sites such as mining, construction, manufacturing, which may include combinations of electrically-powered and fuel-powered machinery and more particularly to determining total energy consumption over discrete intervals for use in planning and worksite management.

### Background

Diesel and liquid fuel pricing does not vary in discrete intervals (e.g., 30 min., 1 hour). The pricing is fixed in a contract for a defined period of time (e.g., month/year) - hence customers have not needed to track the actual fuel consumption in intervals less than the invoicing and/or refueling period. There has been no ability or need to optimize "time of use" of diesel data. However, there is a huge global population of mobile machinery using diesel engines that have potential to be electrified (providing the balance of reliability/infrastructure, price and emissions is met). The replacement cycle of these machines and the additional capital expenditure required will create a long period of time (e.g., decades) where electrical machinery works in parallel with diesel fueled machinery. Optimizing site energy reliability, energy infrastructure, energy price and energy emissions will require a more granular view of diesel fuel consumption over discrete intervals to manage these mixed fleets.

Worksites such as mining, construction, industrial, and other such sites where machinery is used to perform one or more operations rely on various energy sources to ensure the operations may proceed without being energy-limited. As the world proceeds through an energy transition with electrical power consumption predicted to more than double between 2020 and 2050, the share of energy consumption at worksites associated with electrical power is likely to increase. There are many sources of electrical power, including renewable energy sources. While renewable electricity has many benefits, it has at least two key complexities. First, renewable energy is inherently variable based upon the sources of power generation, such as solar and wind, Second, it can be difficult to store efficiently.

Increased electrical usage will lower total energy required but may cause congestion on the electrical grid connections. Careful balancing of diesel fueled machinery with new electrical machinery will allow sites to continue to operate as the electrical grid becomes more robust to cope with increased electrical supply.

The worksites mentioned above may include stationary machinery as well as mobile machinery. It is common for owners of stationary machinery (powered by electrical power, pipeline natural gas) to receive granular insights into energy consumption over discrete time intervals (Interval Data), such as windows of 1, 5, 10, 15, 30, 60 or more minutes. However, worksites that rely on mobile diesel machinery may not easily determine the machinery's energy consumption in the discrete time intervals to match with site electrical power. In particular, diesel-powered machines may often be measured daily, monthly, reflecting the invoice and/or refueling cycle. Accordingly, with such a long window of time, it is difficult or impossible to measure rapid changes in performance, energy consumption, determine peak energy consumption levels, correlate with other energy usage (e.g., electricity), and plan towards emission reduction targets or other goals for the worksite.

Another key driver is that Diesel and other liquid fuels do not have variable pricing. The price of diesel is fixed per liter/gallon at time of delivery or based upon the supply contract duration. Customers have had no incentive to track or optimize the rate of consumption in a specific time interval, the price does not vary in 15- or 30-minute intervals as an electrical market would be based upon the demand and cost of generation.

Mobile diesel machinery presents unique difficulties with respect to determining discrete intervals of energy usage data and have traditionally not been tracked in the same manner as stationary or fixed electrical and/or natural gaspowered machinery. Such stationary machines are typically monitored for energy consumption via sensors (e.g., electric/power meter, flow meter) connected to supply pipes or cables. Some mobile machinery may have a capability of transmitting data via telematics however the data from such methods is not consistent or granular enough to allow fuel consumption to be matched with electricity consumption over a short interval.

Energy management at worksites provides numerous benefits, especially as the energy transition may take many years. Accordingly, having consistent visibility across multiple energy sources at a worksite, the ability to combine and compare energy consumption data and metrics across different energy types, and granular time intervals associated with the energy consumption may provide managers of worksites with opportunities for energy, cost and emissions optimization whilst managing risk.

An example system for energy consumption and energy demand management is described in U.S. Patent 9,569,804 to Stein et. al., titled "Systems and Methods for Energy Consumption and Energy Demand Management" (hereinafter referred to as the '804 document). In particular, the '804 document describes systems for reducing energy consumption and energy demand costs in buildings. The '804 document describes collection of energy interval data associated with a building, collecting historical weather data associated with the building, predicting energy use as a function of the predicted weather and operational inputs, and determining options for reducing energy costs for the building.

Although the system described in the '804 document is configured to provide energy consumption and demand management, it is not able to account for mobile machinery or other non-electrical fuel sources at time intervals that may be combined with electrical interval data at a worksite. Accordingly, the '804 document is not configured to determine energy usage, peak energy time and usage across energy sources and machinery types (e.g., stationary electrical pump and mobile diesel excavator) such that the worksite energy usage can be optimally managed and altered using the insights gathered from the energy interval data across machines.

Examples of the present disclosure are directed toward overcoming the deficiencies described above.

### Summary of the Invention

A system described herein includes a system at a worksite that includes one or more electrical-powered machines and one or more fuel-powered machines that may be powered by fuel sources such as diesel or gasoline. Such machines may include standalone machines such as digging equipment, moving equipment, or other such machines and may also include machines such as pumps, heaters, crushers, conveyors, generators, lighting, and other such machines. The system may also include one or more processors and a non-transitory computer-readable medium having instruction stored thereon that, when executed by the one or more processors, cause the one or more processors to perform various operations. The operations may include receiving power and/or energy data from the one or more electrical-powered machines or meters over a plurality of intervals, the power data associated with a rate of electrical power consumption by the one or more electrical-powered machines over the plurality of intervals and receiving fuel data from the one or more fuel-powered machines over the plurality of intervals, the fuel data associated with a rate of fuel consumption by the one or more fuel-powered machines over the plurality of intervals. The operations further include determining energy usage at the worksite over the plurality of intervals by combining the electrical data and the fuel data for each of the plurality of intervals and determining one or more parameters describing distribution of energy at the worksite. The operations further include determining an energy distribution for the worksite based on the energy usage and the one or more parameters and controlling operation of the one or more electrical-powered machines and the one or more fuel-powered machines based at least in part on the power distribution.

In some examples, the operations may further include determining a peak energy consumption at discrete intervals based on numerous machines using different fuel / energy sources. In addition, using historical data can be used in determining a predicted peak energy consumption for the worksite at a future interval, and determining a budget based at least in part on the predicted peak energy and energy fuel type. The one or more parameters may include at least one of an average energy per interval, peak energy per interval, distribution of energy between fuel and energy sources, distribution of power between types of machine and types of machine based upon fuel. Controlling operation of the one or more electrical-powered machines and the one or more fuel-powered machines may include determining to shift operations between the one or more fuel-powered machines and the one or more electrical-powered machines based at least in part on the one or more parameters or the power distribution. Controlling operation of the one or more electrical-powered machines and the one or more fuel-powered machines may include changing energy consumption by changing operation of one or more machines at the worksite. The one or more processors and the non-transitory computer readable medium may be embodied in a controller of the worksite, and / or in an internet-based telemetry.

In some examples, a method described herein may include receiving energy or power data from one or more electrical-powered machines at a worksite over a plurality of intervals, the energy data associated with a rate of electrical power consumption by the one or more electrical-powered machines over the plurality of intervals and receiving fuel data from one or more fuel-powered machines at the worksite over the plurality of intervals, the fuel data associated with a rate of fuel consumption by the one or more fuel-powered machines over the plurality of intervals. The method may also include determining energy usage at the worksite over the plurality of intervals by combining the electrical data and the fuel data for each of the plurality of intervals. The method may also include determining one or more parameters describing distribution of power and energy at the worksite. The method may also include determining an energy distribution for the worksite based on the energy usage and the one or more parameters. The method may also include controlling operation of the one or more electrical-powered machines and the one or more fuel-powered machines based at least in part on the power distribution.

In some examples, the one or more parameters may include at least one of a threshold peak power, a power variation threshold, and a distribution of power between the one or more electrical-powered machines and the one or more fuel-powered machines. Receiving the fuel data further may include determining a fuel consumption rate by determining a change in fuel on-board the one or more fuel-powered machines over the plurality of intervals. Receiving the fuel data further may include determining a fuel consumption rate by determining a fuel flow rate of the one or more fuel-powered machines over the plurality of intervals. The method further may include determining a peak power consumption based on the power usage, determining a predicted peak power for the worksite at a future interval, and determining a budget based at least in part on the predicted peak power. Controlling operation of the one or more electrical-powered machines and the one or more fuel-powered machines may include determining to shift operations between the one or more fuel-powered machines and the one or more electrical-powered machines based at least in part on the one or more parameters or the power distribution. Controlling operation of the one or more electrical-powered machines and the one or more fuel-powered machines may include changing power consumption by changing operation of one or more machines at the worksite.

### Brief Description of the Drawings

The detailed description is set forth with reference to the accompanying figures. In the figures, the left-most digit(s) of a reference number identifies the figure in which the reference number first appears.
FIG. 1 illustrates a system architecture that may be implemented at a worksite for managing power consumption across machinery at the worksite, according to at least one example.
FIG. 2 illustrates a representation of fuel and electricity power usage with fuel measured across different time intervals than electrical power, according to at least one example.
FIG. 3 illustrates a representation of granular fuel and electricity consumption data at a worksite across time intervals, according to at least one example.
FIG. 4 illustrates a mobile machine of a worksite with sensors and computing devices for determining fuel consumption rates at granular time intervals, according to at least one example.
FIG. 5 illustrates a site controller of a worksite for determining and managing energy and power usage across mobile and stationary machines using a variety of energy sources, according to at least one example.
FIG. 6 illustrates a process for determining energy usage at a worksite and managing energy usage across various machinery, according to at least one example.
FIG. 7 illustrates an example computing system for implementing one or more methods as described herein, according to at least one example.

### Detailed Description

Wherever possible, the same reference numbers will be used throughout the drawings to refer to the same or like parts. In the figures, the left-most digit(s) of a reference number identifies the figure in which the reference number first appears.

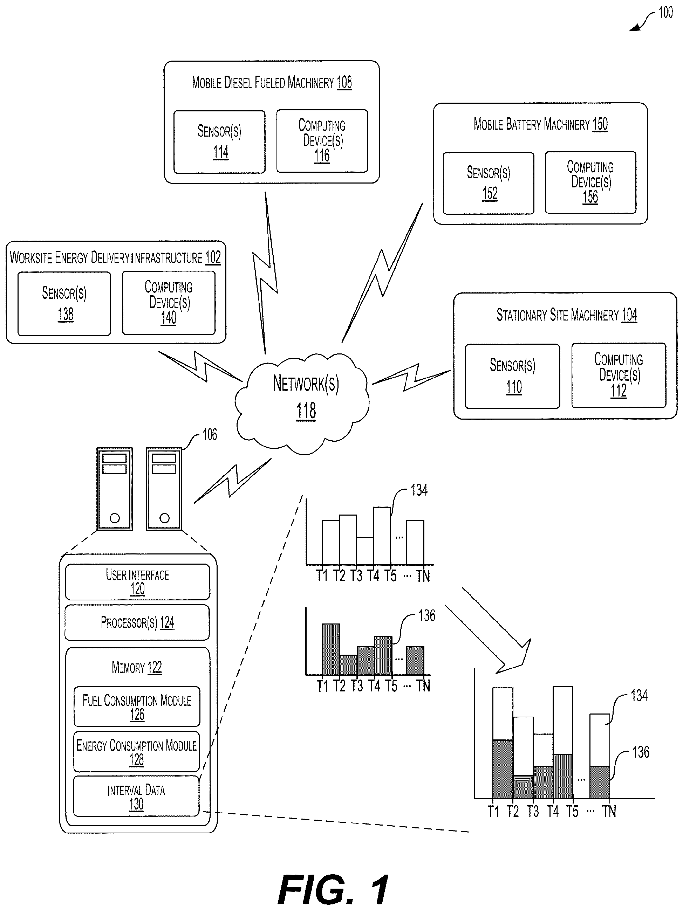

FIG. 1 illustrates a system architecture 100 that may be implemented at a worksite for managing energy consumption across machinery at the worksite, according to at least one example. The system architecture 100 may be implemented to monitor, manage, and control energy usage across a variety of machines at the worksite including one or more mobile diesel-powered machines such as mobile machinery 108, the stationary machinery 104, worksite energy delivery infrastructure 102, or mobile battery machinery 150.

The worksite energy delivery infrastructure 102 includes pipes, cables, tanks and other infrastructure that is used to deliver energy to or around the site. The stationary machinery 104 are permanently connected to work site infrastructure for delivery of energy they require to operate, including electricity, natural gas but may be measured with their own sensors or computing device. Typical applications include but not exclusively, heating boilers, air conditioning, gas turbines, conveyors, crushers, grinders, lighting, motors, generators. The mobile machinery 108 includes machines that normally consume diesel fuel in reciprocating engines including trucks, loaders, pavers, compacters, gensets, diesel engine pumps and crushers, and other such machines that have motive components and are normally intended to be mobile during normal operation. This may also include temporarily fixed machines such as generators, heaters, crushers, and other types of equipment and machinery that have local fuel tanks that a replenished at daily, weekly or similar regular intervals. Mobile battery machinery 150, includes mobile machinery that has a battery to store electricity as an energy source, this battery would be swapped or charged to replenish the energy.

The most common fuels used today are diesel, electricity, and natural gas but other fuels could be used. The stationary machinery 104 may include machines that operate and are powered using electricity, diesel, gas, hydrogen, natural gas, or other fuel sources that can be transmitted through cables and pipes. The mobile machinery 108 are primarily diesel fuel powered but could use hydrogen, liquified gas or bio-fuels that are refueled in a similar manner.

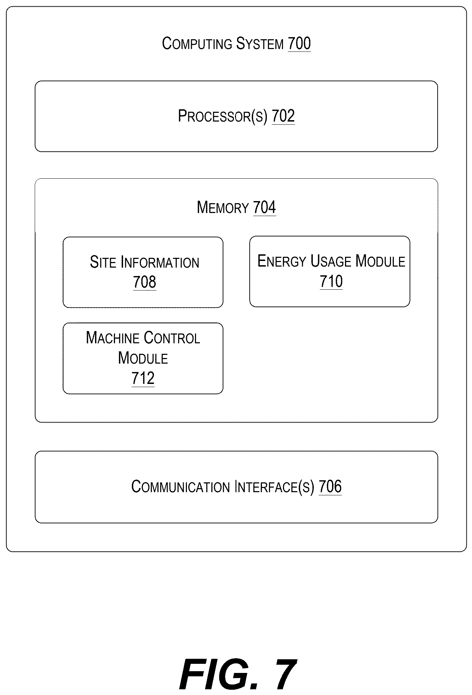

The controller 106 may be an example of a computing system and/or computing device such as described with respect to FIG. 7 herein. The controller 106 is depicted in FIG. 1 as a singular computing device but may include a cloud-based or distributed computing system and/or one or more local computing devices at the site. The controller 106 may, in some examples, represent a combination of a cloud-based computing system in communication with a local computing device of the site. The controller 106 may be configured, as described herein to determine total energy consumption or generation (e.g., electricity, diesel, solar, etc.) for a worksite (e.g., construction, mine, etc.) at interval time frames. The controller 106 may combine energy usages across different machines and different fuel types to determine a single overall energy usage. The energy usage determined by the controller 106 may be divided over intervals of time, such as one hour, thirty-minute, fifteen-minute, five-minute, one-minute, or other length intervals. The time intervals and associated energy with each time interval enable the controller 106 to provide total peak energy consumption for the worksite across all machines and across all fuel or energy types. The granularity of the time intervals and the time of day associated with the energy consumption data may enable the controller 106 to optimize for one or more parameters such as minimizing pricing, reducing peak energy consumption for a single energy type by distributing workloads to machines using other energy sources during a peak time, reducing emissions, reducing variability in energy consumption, storing energy (e.g., in on-site batteries or other storage devices) during lower-cost time periods when energy is relatively less expensive, and other such parameters.

Additionally, the energy content of the different fuel sources consumed at the worksite may vary, for instance, hydrogen has a different amount of energy per kilogram than another fuel such as diesel. The system architecture 100 provides for collecting total energy consumption across sources and may also combine the varied fuel sources based on a common energy measurement unit to provide for energy storage and planning across all devices, in addition to breakdowns of the energy consumption across different fuel types for an accurate picture of the worksite. In this manner, the system architecture 100 may show energy improvements as different sources of fuel are used and/or replaced with other fuel types.

As machinery transitions to electrification in the future, the system architecture 100 provides visibility into peak energy consumption as well as time intervals of energy consumption at a worksite such that energy demands may be met in the future. For instance, as more and more machines transition to electric power, the worksite may need to be equipped with storage devices (e.g., batteries) and infrastructure for charging. The number and size of batteries as well as the amount and type of infrastructure is difficult to anticipate or estimate without knowing peak energy consumption in defined intervals across systems and fuel types. The electrification of machines may require scheduling of charging (refueling) of the machine batteries based upon the energy consumption of the site. The actual duty cycle of the existing mobile diesel machinery or a mixed fleet of mobile diesel machines and mobile electric machines may dramatically impact the charging schedule. Accordingly, the particular needs of electric power systems are benefited by the ability of the system architecture 100 to monitor and forecast energy usage in small time intervals to ensure the site energy capacity is not exceeded. Similarly, data for the energy consumption of diesel machinery over time intervals provides visibility into patterns of consumption that may be used to derive one or more insights for efficient use of energy.

The system architecture 100 provides for the controller 106 to gather interval data 130, the interval data including granular insights into energy consumption over discrete time intervals. The interval data 130 may be gathered for total energy consumption 300 across an entire worksite, across different types of machines, different fuel types, and provide a single view of the overall energy consumed at the worksite. The interval data 130 provides for a granular detailed view of the energy consumption across the worksite at particular time windows, as well as the ability to see the types of energy 136 consumed within each time window.

In the system architecture 100, the interval data 130 is not only available for electrical utility data, but is also available across fuel types and worksite systems, including, for example, mobile machines. Diesel fuel (or other such fuel) for a worksite is typically ordered in advance (per month/annual contract), and a local fuel bulk storage is refilled when empty and the fuel tanks on mobile equipment are refilled based upon their work schedule or a low fuel warning. The interval data 130 for diesel fuel includes an interval that is time and date stamped and can be integrated with electrical site data over a common denominator. Existing meters for electrical, natural gas, and other such meters may use a universal time format to allow for aggregation of meter data. Mobile machinery fuel data also includes a universal time format to allow for aggregation of data together. The data from various sources includes timestamps for aggregating the data and coordinating the data to be synchronous. In some examples, the intervals may be aligned with an external reference such as a local time clock, Coordinated Universal Time (UTC), Greenwich Mean Time (GMT), or some other reference time such that the intervals may be synchronized. Additionally, the synchronization of time data across sources through the universal time stamp and/or location enables synchronization and combination with other systems such as weather and electricity pricing systems.

The interval data 130 may include synthetic interval data that is calculated, projected, or otherwise estimated. Accordingly, delivery of the diesel fuel to the worksite does not constitute consumption of the fuel as the fuel has not been consumed for operations yet. The interval data 130 described herein provides for measuring the flow and/or consumption of fuel at the actual time interval of use (e.g., in an internal combustion engine).

The system architecture 100 provides for gathering the fuel consumption from the mobile machinery 108 and/or the mobile battery machinery 150, and the stationary machinery 104, at the set intervals, such that the time intervals for the worksite energy delivery infrastructure 102, mobile machinery 108, the mobile battery machinery 150 and the stationary machinery 104 are the same time intervals, or can be combined over a common denominator. Accordingly, the fuel and electricity (total energy consumption) consumption across the machines and systems can be compared, added together, and managed in an accurate manner relative to one another.

The interval data 130 may be used to analyze and compare consumption of energy at specific time intervals across an entire worksite, including the mobile machinery 108. In some examples, the time intervals may include intervals of one hour, thirty minutes, fifteen minutes, five minutes, one minute, or other length intervals. The time intervals across the different sources are equal such that the comparison between different sources of data can be performed. In some instances, the interval data may need to be averaged over a time period if finer time interval data is not available for a particular source of data. Accordingly, the time intervals may be determined and/or defined based on the worksite and the dynamic features of energy consumption. For instance, some worksites may have less-dynamic changes in energy consumption and therefore use a first time interval (e.g., 30 minutes) while some worksites may see drastic and dynamic changes in energy consumption over time and therefore use a 10 second time interval to provide greater understanding of the energy consumption and dynamic aspects of energy consumption at the worksite.

The interval data 130 is repeatable day over day and occur at fixed times for each day. The interval data 130 has a universal date and time stamp for providing consistency of comparisons over time as well as between locations. The time intervals may be compared using the time stamps to compare similar or identical windows of time across days (or other periods of time such as across weeks or months). Such comparisons may enable detection of longer-term trends or variations that may occur over the course of a longer time frame, such as a week or monthly trend.

The worksite energy delivery infrastructure 102 includes sensor(s) 138 and computing device(s) 140. The sensor(s) 138 may be used to determine electrical energy consumption or usage for infrastructure equipment, such as electrical power flowing through charging infrastructure for batteries or other such infrastructure for providing power to the worksite. The sensor(s) 138 may include electrical meters, flow rate meters, and other such devices capable of measuring and/or determining a throughput rate of an electrical energy source through the infrastructure. In some examples, the sensor(s) 138 may include a smart meter or other form of utility-provided advanced metering infrastructure presently available to measure consumption of a resource for providing electrical energy. The computing device(s) 140 may collect data from these sensor(s) and present the data to the controller 106 via the network 118. In some examples, additional sources of energy may be monitored such as gas metering for sources such as natural gas or other such method of metering and measuring consumption of energy sources.

The stationary machinery 104 may include machinery that is primarily stationary during operation and may be fuel-powered or electrical-powered machinery. Some of the stationary machinery 104 may, for example receive a supply of electricity via the worksite energy delivery infrastructure 102. In some examples, others of the stationary machinery 104 may alternatively or additionally be powered by natural gas, diesel, hydrogen, or other fuel sources. The stationary machinery 104 may be equipped with sensor(s) 110 and computing device(s) 112 that provide for determination of energy consumed at the stationary machinery 104. The sensor(s) 110 for electrical-powered machinery may include meters and electrical metering systems similar to the electrical meters of the worksite energy delivery infrastructure 102 and the sensor(s) 110 for fuel-based machines may include gas metering or other fluid-powered machines of the stationary machinery 104. In some examples of fuel-based machines, the sensor(s) 110 may also include actual or virtual fuel sensors to measure and/or determine a flow rate of a fuel, fuel level over time in a storage reservoir, or otherwise track fuel provided to and consumed by the stationary machinery 104. In examples, the fuel consumption rate of the fuel-based machines may be based on a virtual sensor that uses data from an engine control unit (ECU) of the machine to determine fuel usage in place of a separate sensor. The computing device(s) 112 receive data from the sensor(s) 110 and determine energy consumption, energy consumption rates, fuel consumption, fuel consumption rates, or other such information. The computing device(s) 112 also communicates data from the sensor(s) 110 to the controller 106 where the energy usage may be determined and aggregated across different machines for the entire worksite.

The mobile machinery 108 may include machinery that is primarily mobile during operation and may be diesel-fuel-powered or electrical-powered machinery. The mobile machinery 108 may, for example with respect to the electrical-powered machinery, receive a supply of electricity via the worksite energy delivery infrastructure 102. The mobile machinery 108 may also include fuel-based machines that may be powered by natural gas, diesel, hydrogen, or other fuel sources. The mobile machinery 108 is equipped with sensor(s) 114 and computing device(s) 116 that provide for determination of energy consumed at the mobile machinery 108. The computing device(s) 116 commonly uses a fuel map to estimate fuel consumption. In such examples, the engine control module of the mobile machinery 108 monitors inputs such as throttle position, torque, shaft rpm, ambient temperature, exhaust temperature, oxygen sensors, and other such sensors of the mobile machinery 108 and uses these parameters as well as the fuel map to estimate the amount of fuel provided to the cylinders of the engine during operation. Accordingly, the mobile machinery 108 may determine and/or estimate using sensor data the fuel consumed either directly through the use of fuel sensors or indirectly through the use of the fuel map. The computing device(s) 116 receive data from the sensor(s) 110 and determine energy consumption, energy consumption rates, fuel consumption, fuel consumption rates, or other such information. The sensor(s) 114 may include fuel sensors to measure and/or determine a flow rate of a fuel, fuel level over time in a storage reservoir, or otherwise track fuel provided to and consumed by the mobile machinery 108. The computing device(s) 116 also communicates data from the sensor(s) 114 to the controller 106 where the energy usage may be determined and aggregated across different machines for the entire worksite. In some examples, the computing device(s) 116 may receive the sensor data and convey it to a controller 106 at or near real-time. In some examples, the computing device(s) 116 may aggregate sensor data over a period of time and then convey the aggregated sensor data to the controller 106. For example, the sensor data may be measured at a rate of one measurement per second and aggregated on the machine over an interval (e.g., 1-minute intervals) before being conveyed by the computing device(s) 116.

The sensor data may be aggregated and/or appended with universal time data and location data indicative of GPS positioning and/or geographic location information over the interval. For instance, over a first interval of time from T1-T2, fuel consumption may be measured by sensors and/or estimated by the ECM of the machine and the fuel consumed over the interval determined based on the sensor data and/or estimates at the start and end of the interval. The sensor data may be appended or stored in association with location data such that weather data, electricity pricing data, fuel pricing data, and other such data may be accessible after the fact as such data may be highly time and location dependent and important to accurately track to determine energy consumption and costs for the energy consumed at the worksite at the particular time. This data, sensor data, interval data, location data, and other such data such as time data, may be stored in datasets that may be processed by one or more artificial intelligence and/or machine learning models to output energy consumption trends, analysis, and other such statistics and insights.

The system architecture 100 includes a controller 106 that communicates with the worksite energy delivery infrastructure 102, stationary machinery 104, mobile machinery 108 and mobile battery machinery 150 to receive data such as power and usage data, and determines power consumption across the worksite, among other operations. In some examples, the controller 106 may be positioned at or remote from the worksite or have portions at the worksite and portions remote from the worksite. The controller 106 communicates with the various elements at the worksite across network 118 which may include wired, wireless, and other types of network connections.

The controller 106 is in electronic communication with the other components of the system architecture 100. As used herein, the phrase "electronic communication" refers to a configuration wherein data may be transferred via a wired connection, a wireless connection, or combinations thereof. As used herein, the term "controller" (e.g., with reference to controller 106 and/or other controllers described herein) may embody a computing device (e.g., a computer) having a single microprocessor or multiple microprocessors, computer memory (e.g., non-transitory computer-readable medium), and/or other components configured to receive inputs from other components of the worksite or the system architecture 100 and generating output signals based on the inputs. For example, controllers may include a memory, a secondary storage device, a clock, and a processing hardware for accomplishing a task consistent with the present description. Numerous commercially available microprocessors can be configured to perform the functions of controllers described herein. It should be appreciated that controllers described herein could readily embody a general machine controller (e.g., an electronic control unit (ECU), central processing unit (CPU), etc.) capable of controlling numerous other machine functions. Various other known circuits may be associated with controllers described herein, including signal-conditioning circuitry, communication circuitry, or another appropriate circuitry. Controller 106 is configured to receive data inputs from each of the worksite energy delivery infrastructure 102, stationary machinery 104, and mobile machinery 108, process the data, and generate output signals based on the inputs and/or processed data.

The controller 106 includes a user interface 120, memory 122, processor(s) 124, fuel consumption module 126, energy consumption module 128, and interval data 130. The user interface 120 provides for a user to interact with the controller 106, for example to input parameters for controlling operations of machines based on energy consumption data. The user interface 120 also provides a display for viewing and interacting with the interval data 130. The interval data 130 puts overall energy consumption across devices and systems over a common denominator for visibility, trend identification, and optimization. The user interface 120 may provide functionality for a user to view and interact with the interval data 130 including the total energy consumption 134 and types of energy 136 consumed at the worksite. The memory 122 includes a non-transitory computer-readable medium and stores programs as executable instructions to be carried out by processor(s) 124.

The energy consumption module 128 receives sensor data from the sensor(s) 110 of the stationary machinery 104 that is electrically-powered and/or from sensor(s) 152 of the mobile battery machinery 150 via computing device(s) 156 of the mobile battery machinery 150. The sensor data may include a rate of electrical energy consumption by each of the electrical-powered machines as determined by an electrical meter or other such sensor system. The electrical consumption data may be determined for each time interval and may be sampled continuously over the time interval, averaged over the time interval, or otherwise determined for each time interval. The energy consumption module 128 may capture electrical power data for stationary machinery 104 and mobile machinery 108. The energy consumption module 128 may be determined as the electrical power is consumed and/or when the energy is stored in a battery of the worksite and/or machine.

The fuel consumption module 126 receives sensor data from each of the fuel-powered machines of the stationary machinery 104 and/or the mobile machinery 108 and determines a fuel consumption rate for each machine based on the sensor data. In some examples the sensor data may include a rate of fuel consumption over a time interval. Fuel-powered engines may use a fuel map to estimate fuel consumption. In the fuel map, the engine control module (ECM) monitors inputs such as throttle position, throttle pedal, torque, shaft speed, RPM, actuator/solenoid time, ambient temperature, exhaust temperature, oxygen sensors, and other such information. The ECM uses the monitored parameters to predict and/or estimate the amount of fuel fed into the cylinders of the engine for combustion. This fuel map estimation may be used for the fuel consumption rate for each machine as reported by the ECM. In some examples, the sensor data may include fuel level data in a fuel storage tank of the machine. At the start and end of the time interval, the fuel level may be determined such that an average fuel consumption over the time interval may be determined by subtracting the fuel level at the end of the time interval by the fuel level at the start of the time interval and then dividing by the length of the time interval. In some examples, the sensor data may include a fuel flow rate through a fuel pump of the machine. In some examples, the fuel consumption module 126 may determine the fuel consumption rate for a time interval by sampling or averaging sensor data and/or the fuel map over periods of time during the time interval.

The fuel consumption module 126 may determine the fuel consumption rate for each time interval for each of the stationary machinery 104 and each of the mobile machinery 108 and the fuel consumption module 126 also aggregates the fuel consumption for the stationary machinery 104 and the mobile machinery 108 for each time interval to determine an overall fuel consumption rate at each time interval for the entire worksite. In some examples, the fuel consumption module 126 may determine the fuel consumption rate at or near real time. In some examples, the fuel consumption module 126 may determine the fuel consumption after the fact and/or in a batch process for stored fuel consumption data.

Alternatively, the fuel consumption module 126 may receive data from the ECM of mobile machinery 108 such as throttle position, throttle pedal, torque, shaft speed, RPM, actuator/solenoid time, ambient temperature, exhaust temperature, oxygen sensors, and other such information. The fuel consumption module 126 may predict and/or estimate the amount of fuel fed into engine for combustion. This fuel estimation may be used for the fuel consumption rate for each machine.

The controller 106 may use the interval data 130 from both the electrical-based machines and the fuel-based machines to determine total energy consumption over the time intervals as well as peak energy consumption to provide both a cumulative indication of how much energy is consumed at a particular worksite across all energy forms as well as a maximum energy consumption rate. Additionally, the controller 106 may help adjust for dynamic fuel pricing either from electrical or fuel-based energy sources. The controller 106 provides visibility into when peak energy consumption occurs such that it may be aligned with lower-priced energy rates (e.g., peak power aligned with cheaper energy rates). The controller 106 also provides for planning functionality including planning for sustainability. For example, the controller 106 with the interval data 130 may be used to determine diesel usage at the worksite, natural gas usage, biofuel usage, or other fuel usage to identify workloads and/or operations that may be performed by other machines using different types of fuel. In this manner, the controller 106 may be able to adjust emissions output at the worksite based on the split or share of fuel sources used as a proportion of the total energy at the worksite.

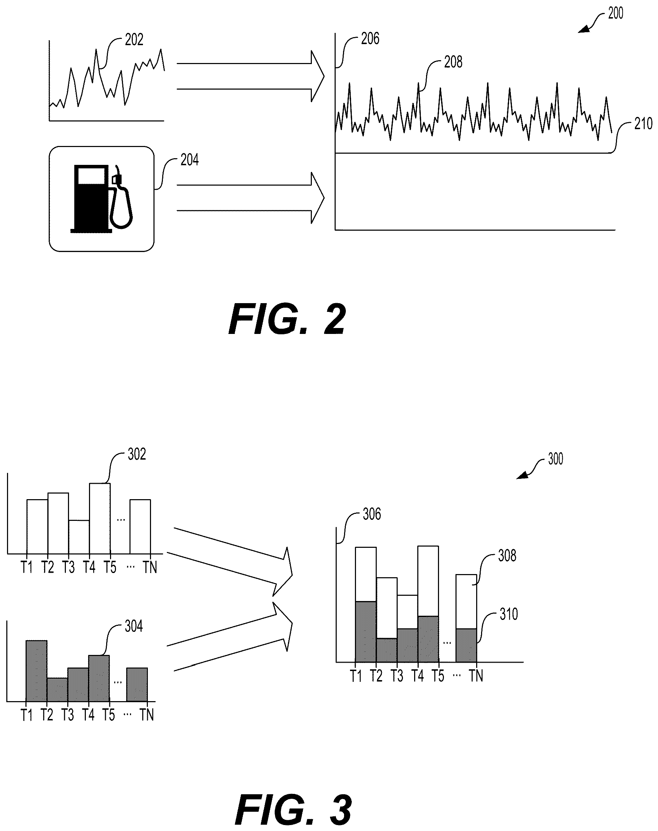

FIG. 2 illustrates a representation of fuel and electricity power usage 200 with fuel usage 204 measured across a longer time interval than electrical power usage 202, according to at least one example. In an example the fuel usage 204 over a time period may be averaged over a longer time period, for instance in a typical system that may only record usage when a diesel supply is replenished, by refilling a storage tank. The combined energy usage 206 therefore shows the electrical power usage 208 over time intervals when combined with the fuel usage 210 over the same time periods. For example, the electrical power usage 202 may be measured in fifteen-minute intervals and the fuel usage may be measured in a month-long interval. This may be an illustration of how intervals for the mobile machines and stationary machines or other electrical devices may be difficult to combine for determining peak power consumption at the worksite using conventional approaches.

For example, the fuel may be supplied in bulk and averaged across a month-long interval. Such data can be used to assess energy consumption over longer periods of time and to calculate total emissions from the worksite over an extended period. However, the peak energy consumption determinations or peak emissions at a particular time of day, day of the week, or to identify short-term trends may require the fuel usage 204 to be collected and correlated over a shorter time interval to enable the controller 106 to make determinations at short time intervals.

In an example, the electrical power usage 202 and the fuel usage 204 may be determined over intervals of time. The energy and the fuel over time may aggregate the electrical power and the fuel consumed over intervals of time. The electrical power usage and the fuel usage may be aggregated by the controller and/or a computing device such as a cloud computing system over intervals that are identical (e.g., sharing a timestamp and each interval also having the same length of time) or may be different. In some examples, each sensor and/or device may gather the data over synchronized intervals of equal length. In some examples, the energy and the fuel usage may be gathered from the sensor data over time intervals that may not be synchronized and may be of different interval lengths. Intervals of smaller lengths can be combined to match intervals of greater lengths such that the energy and the fuel usage may be combined for the combined energy usage 206. Finding a common denominator for the interval length and the start/stop time of the intervals may be a task for the controller 106 that enables combination of the different data sources into the combined energy usage 206.

FIG. 3 illustrates a representation of total energy consumption 300 showing granular fuel and electricity consumption data at a worksite across time intervals, according to at least one example. The electrical usage 302 and the fuel usage 304 may be measured using sensors and/or determined based on data from a virtual sensor or source such as an ECU at the same and/or similar length intervals, such as over intervals T1-T2, T2-T3, T3-T4, T4-T5, and so on through TN. In some examples, the time intervals may be different but may be within a threshold percentage of each other. For instance, the time interval data may for instance be measured and/or determined for the fuel usage 304 over a thirty-minute interval while the electrical usage 302 may be over a fifteen-minute interval. In some examples, the time interval for each may be the same. The electrical usage 302 and the fuel usage 304 may be represented on a consumption data 306 showing combined consumption 308 as well as a portion 310 assigned to each of the electrical usage 302 and the fuel usage 304.

The consumption data 306 may therefore show energy consumption data for stationary as well as mobile machinery. For instance, diesel consumption may be measured in a fifteen-minute interval that corresponds with a fifteen-minute interval for electricity consumption. The intervals may start and stop at the same points in time such that the data series can be combined and added over the time series. Existing meters such as electrical meters may use a universal time format to allow for aggregation of meter data. Mobile machinery fuel data also includes a universal time format to allow for aggregation of data together. The data from various sources includes timestamps for aggregating the data and coordinating the data to be synchronous. In some examples, the intervals may be aligned with an external reference such as a local time clock, Coordinated Universal Time (UTC), Greenwich Mean Time (GMT), or some other reference time such that the intervals may be synchronized. Additionally, the synchronization of time data across sources through the universal time stamp and/or location enables synchronization and combination with other systems such as weather and electricity pricing systems. The consumption data 306 therefore may be used by the controller 106 to determine peak times of day when energy consumption is highest and/or above a threshold level across the worksite. The consumption data 306 may also be used to highlight and identify assets that consume energy and/or determine operations performed by machines that cause significant extra fuel consumption. The controller 106 may use the consumption data 306 to identify times for using energy, e.g., to identify a time of day to prioritize electrical usage 302 when the electrical usage 302 may peak outside of peak electricity cost periods. The controller 106 may combine the electrical usage 302 and the fuel usage 304 to determine total worksite energy consumption over the time intervals that provides granular details with respect to energy consumption at discrete windows of time.

The electrical usage 302 and the fuel usage 304 may be measured at a first frequency of intervals (e.g., at the time intervals discussed herein) and transmitted to the controller 106 at a second frequency or time interval that may differ from the first frequency (e.g., the electrical usage 302 may be measured but not immediately conveyed to the controller 106 and batches of data may be conveyed together, each batch including multiple time intervals of data. The first frequency and the second frequency may differ from each other. The first frequency may describe a frequency at which the data is collected from sensors and stored in a data acquisition module (e.g., computing device) on the machine. For example, an engine management system, vehicle information system, or other such system. The first frequency determines the shortest time interval over which the energy consumption may be determined. The second frequency may relate to a frequency of transmitting the sensor data from the computing device of the machine to the controller 106. The second frequency may be lower than the first frequency such that the measurement data may be stored and collected at the machine before being conveyed to the controller 106 at a later time.

The consumption data 306, that includes both the electrical usage 302 and the fuel usage 304 may be used by the controller 106 to determine historical energy consumption at a worksite. Additional sensor data associated with the worksite, such as temperature, humidity, and other such data may enable identification, by the controller 106 of particular conditions that may drive increased energy consumption. Additionally, output from the worksite may be correlated with the consumption data 306 to enable energy consumption to be correlated with units of production for the worksite. Such additional data may be used to enable forecasting of production and energy requirements for the worksite. For example, a forecasting model, including a machine learning model, may be used to forecast and determine worksite infrastructure such as electrical transmission systems at the worksite. The consumption data 306 may also be used to model and enable conversion from a first type of energy to a second type of energy, for instance to determine electricity required to displace diesel energy. The consumption data 306 may be used to control systems at the worksite based on the spikes and dips in energy consumption and/or energy price variability. In some examples, the consumption data 306 may be used to determine changes in worksite energy usage to even out or maintain energy consumption within a threshold amount of an average. For instance, the machines may be controlled to prevent or reduce the spikes and/or dips in energy consumption over time intervals.

The consumption data 306 may enable mobile machinery operators and controllers to actively plan and manage energy consumption and energy transitions to electrical power. The consumption data 306 includes mobile machinery energy consumption in time intervals equal to intervals for electricity consumption such that the energy consumption is determined over a common denominator (e.g., the time intervals).

The consumption data 306 enables the controller 106 to trace energy usage across an entire site, energy flows, energy costs, emissions and simulate the impact of different energy sources and/or future site improvements at short (e.g., less than one hour) intervals. The consumption data 306 may be combined with external data sources such as weather, humidity, altitude, production levels, and other such data to improve prediction accuracy of energy consumption at the worksite.

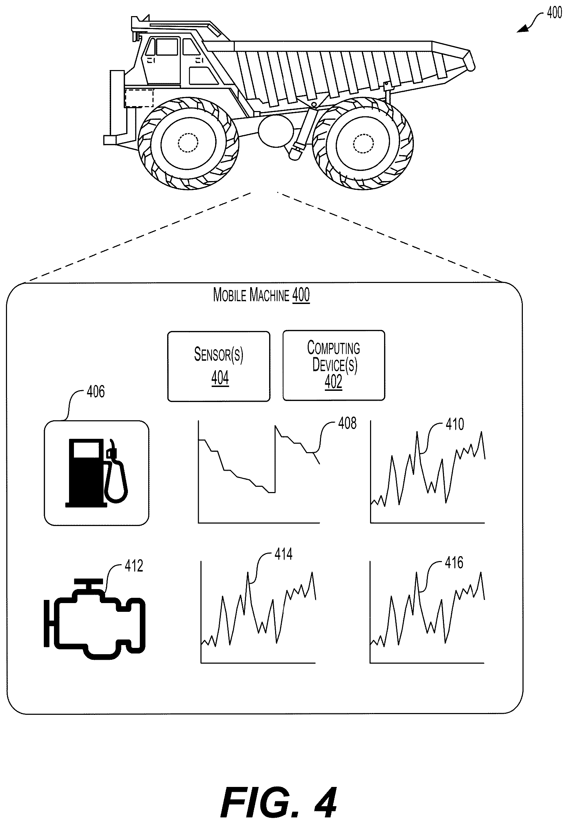

FIG. 4 illustrates a mobile machine 400 of a worksite with sensor(s) 404 and computing device(s) 402 for determining fuel consumption rates at granular time intervals, according to at least one example that may be similar or identical to the mobile machinery 108 of FIG. 1. The mobile machine 400 is an example of mobile machinery 108 and the mobile machinery 108 may include one or more machines that may move around the worksite such as trucks, loaders, pavers, compacters, and other such machines that have motive components and are intended to be mobile during normal operation. The mobile machine 400 may include machines that operate and are powered using natural gas, diesel, hydrogen, or other fuel sources.

As discussed above, the mobile machinery 108 may include machinery that is primarily mobile during operation and may be fuel-powered. The mobile machine 400 is equipped with computing device(s) 402 and sensor(s) 404 that provide for determination of energy consumed at the mobile machine 400. The sensor(s) 404 may include fuel sensors to measure and/or determine a flow rate of a fuel 406, fuel level over time in a storage reservoir, or otherwise track the fuel 406 provided to and consumed by the mobile machine 400. The computing device(s) 402 receive data from the sensor(s) 404 and determine energy consumption, energy consumption rates, fuel consumption, fuel consumption rates, or other such information. The computing device(s) 402 also communicates data from the sensor(s) 404 to the controller 106 where the energy usage may be determined and aggregated across different machines for the entire worksite. In some examples, the computing device(s) 402 may convey the sensor data at or near real-time. In some examples, the computing device(s) 402 may aggregate sensor data over a period of time and then convey the aggregated sensor data to the controller 106.

The computing device(s) 402 receives sensor data 408 from the sensor(s) 404 and determines a fuel consumption rate 410 based on the sensor data. In some examples the sensor data 408 may include a fuel consumption rate 410 over a time interval. In some examples, the sensor data 408 may include a flow rate of fuel through a fuel injector of an engine for the machines. In some examples, the sensor data 408 may include fuel level data in a fuel storage tank of the machine. At a start and end of the time interval, the fuel level may be determined such that an average fuel consumption over the time interval may be determined by subtracting the fuel level at the end of the time interval by the fuel level at the start of the time interval and then dividing by the length of the time interval. In some examples, the sensor data 408 may include a fuel flow rate through a fuel pump of the machine. In some examples, the computing device(s) 402 may determine multiple fuel consumption rates for each time interval, for example by sampling or averaging sensor data over periods of time during the time interval.

The computing device(s) 402 may determine the fuel consumption rate 410 for each time interval and may convey the fuel consumption rate 410 and/or the sensor data 408 to the controller 106. In some examples, the computing device(s) 402 may determine the fuel consumption rate 410 at or near real time. In some examples, the computing device(s) 402 and/or the controller 106 may determine the fuel consumption rate 410 after the fact and/or in a batch process for the sensor data 408. In some examples, historical fuel consumption data may be used to simulate the fuel consumption rate 410.

The computing device(s) 402 may receive sensor 414 from one or more sensor(s) 404 associated with an engine 412 of the mobile machine 400. The sensor(s) 404 associated with the engine 412 may include engine operating characteristics, such as tachometer data, engine speed, pressure data, or other such engine operating parameters that the computing device(s) 402 and/or controller 106 may use to determine fuel consumption data 416.

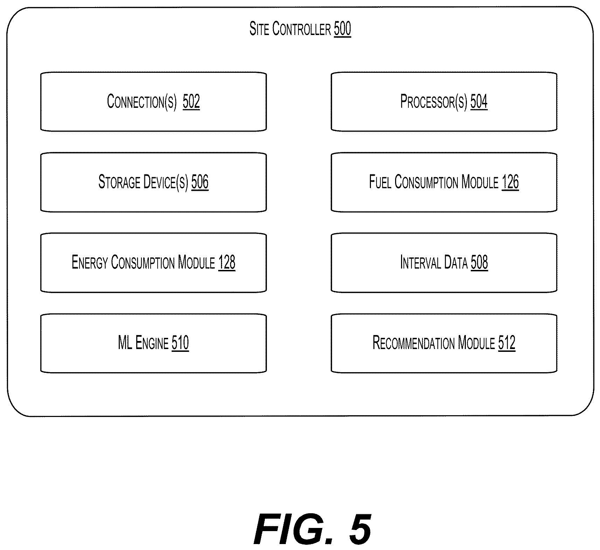

FIG. 5 illustrates a site controller 500 of a worksite for determining and managing energy usage across mobile and stationary machines using a variety of power sources, according to at least one example. The site controller 500 includes a fuel consumption module 126 as described above with respect to the controller 106 of FIG. 1. The site controller 500 includes an energy consumption module 128 as described above with respect to the controller 106 of FIG. 1.

The site controller 500 includes connection(s) 502 that provide communication connections to one or more systems and/or devices of a worksite including stationary machines, mobile machines, and worksite infrastructure. The connection(s) 502 may include network connections over one or more network connections to enable communication of sensor data, control data, and other such information. The connection(s) 502 may provide for electronic communications wherein data may be transferred via a wired connection, a wireless connection, or combinations thereof.

The site controller 500 includes processor(s) 504 that may include one or more computing devices, processors, a single microprocessor or multiple microprocessors, storage device(s) 506 (e.g., non-transitory computer-readable medium), and/or other components configured to receive inputs from other components of the worksite or system architecture and generating output signals based on the inputs. For example, the site controller 500 may include a memory, a secondary storage device, a clock, and a processing hardware for accomplishing a task consistent with the present description. Numerous commercially available microprocessors can be configured to perform the functions of controllers described herein. It should be appreciated that controllers described herein could readily embody a general machine controller (e.g., an electronic control unit (ECU), central processing unit (CPU), etc.) capable of controlling numerous other machine functions. Various other known circuits may be associated with controllers described herein, including signal-conditioning circuitry, communication circuitry, and another appropriate circuitry.

The site controller 500 includes interval data 508 that may describe and/or be associated with total energy consumption across an entire worksite, across different types of machines, different fuel types, and provide a single view of the overall energy consumed at the worksite. The interval data 508 provides for a granular detailed view of the energy consumption across the worksite at particular time windows, as well as the ability to see the types of energy consumed within each time window. The interval data 508 is not only available for electrical utility data, but is also available across fuel types and worksite systems, including, for example, mobile machines. Diesel fuel (or other such fuel) for a worksite is typically ordered in advance (per month/annual contract), and a local fuel bulk storage is refilled when empty and the fuel tanks on mobile equipment are refilled based upon their work schedule or a low fuel warning. Accordingly, delivery of the diesel fuel to the worksite does not constitute consumption of the fuel as the fuel has not been consumed for operations yet, but is already paid for and therefore is typically no longer tracked. The refueling or invoicing period of the diesel fuel at the site differs from the interval data. The interval data described herein provides for measuring the flow and/or consumption of fuel at time of use (e.g., in an internal combustion engine).

In some examples, the interval data 508 may be determined based on sensor data from the mobile machine and/or the stationary machine as described herein at the set intervals, such that the time intervals are the same time intervals. Accordingly, the fuel consumption across the devices and systems can be compared, added together, and managed in an accurate manner relative to one another.

The interval data 508 may be used to analyze and compare consumption over time intervals across an entire worksite, including the mobile machines described herein. In some examples, the time intervals may include intervals of one hour, thirty minutes, fifteen minutes, five minutes, one minute, or other such time intervals. Accordingly, the time intervals may be determined and/or defined based on the worksite and the dynamic features of energy consumption. For instance, some worksites may have fewer dynamic changes in energy consumption and therefore use a first time interval while some worksites may see drastic and dynamic changes in energy consumption over time and therefore use a second time interval less than the first time interval to provide greater understanding of the energy consumption and dynamic aspects of energy consumption at the worksite.

The interval data 508 is repeatable day over day and occur at fixed times for each day, accordingly, time intervals may be compared against the same time intervals on different days for direct comparison and identification of longer-term trends or variations that may occur over the course of a longer time frame, such as a week or monthly trend.

The site controller 500 includes a machine learning module 510 that may implement one or more machine learning algorithms and/or techniques to determine trends, identify energy usage, determine forecasting and predictions of energy usage at the worksite, and other such analysis of the interval data 508. The machine learning module 510 may be used to determine one or more recommendations and/or adjustments to operations at the worksite through the recommendation module 512. For example, as described herein, the machine learning module 510 and the recommendation module 512 may be used to recommend adjustments to operations to change energy consumption, adjust peak energy usage, adjust a share of energy used as fuel versus electrical or other energy forms. The recommendation module 512 may receive one or more parameters including a threshold peak power for the worksite, a power variation threshold indicating a variability of energy usage, a distribution of power between different types of machines using different energy sources, and other such parameters. The recommendation module 512 may determine one or more changes to operations at the worksite to comply with the received parameters. With increasingly smaller intervals, the machine learning module 510 becomes increasingly capable of providing insights and projections with respect to fuel and energy consumption. The machine learning module 510 may predict fuel consumption for a repeatable task for a diesel-powered machine that causes the highest fuel consumption for the machine.

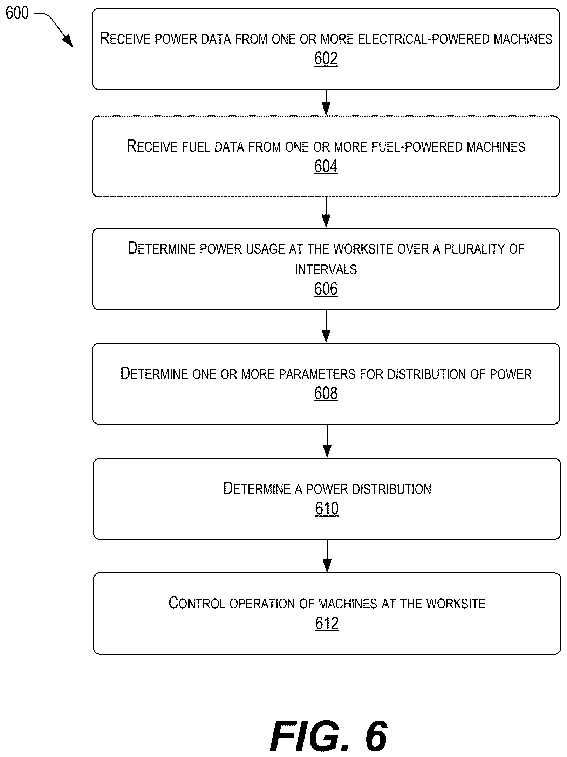

FIG. 6 illustrates a process 600 for determining energy usage at a worksite and managing energy usage across various machinery, according to at least one example. The process 600 is illustrated as a collection of steps in a logical flow diagram, which represents operations that can be implemented in hardware, software, or a combination thereof. In the context of software, the steps represent computer-executable instructions stored in memory. When such instructions are executed by, for example, the controller 106, such instructions cause the computing device(s) described herein to receive instructions corresponding to producing at least energy usage data and consumption data based on sensor data from sensors of the machines at the worksite. Such computer-executable instructions can include routines, programs, objects, components, data structures, and the like that perform particular functions or implement particular abstract data types. The order in which the operations are described is not intended to be construed as a limitation, and any number of the described steps can be combined in any order and/or in parallel to implement the process.

At operation 602, the process 600 includes the controller 106 receiving power data from one or more electrical-powered machines including mobile and/or stationary machines at a worksite. The power data may include power data describing electrical power consumed during time intervals over a period of time. The power data may include utility meter data describing electricity consumption in intervals of time that may be less than one hour including intervals of one hour, thirty minutes, fifteen minutes, five minutes, one minute, or other such intervals of time. The power data may be gathered by one or more sensors of the electrical-powered machines such as a power meter.

At operation 604, the process 600 includes the controller 106 receiving fuel data from one or more fuel-powered machines. The fuel data may be sent from one or more mobile or stationary machines at the worksite. The fuel data may be associated with intervals similar and/or identical to intervals of the power data. The fuel data may be determined based on sensor data from the fuel-powered machines such as fuel level data over the time intervals, fuel consumption rates, and other such data. In some examples, the controller 106 may receive fuel consumption data as computed by a computing device of the fuel-powered machines that is subsequently conveyed to the controller 106.

At operation 606, the process 600 includes the controller 106 determining energy usage at the worksite over a plurality of intervals. The energy usage at the worksite may include an aggregation of power data and fuel data for machines at the worksite. The power data and fuel data may include consumption data over particular time intervals. Accordingly, the energy usage at the worksite may describe total energy consumed at the worksite over particular intervals of time.

At operation 608, the process 600 includes the controller determining one or more parameters for distribution of power. The parameters may include particular indications of desired control of operations of the worksite for maintaining within a particular energy budget, targeting peak energy during particular energy pricing times from a utility pricing model, a threshold peak power for the worksite, a power variation threshold indicating a variability of energy usage, emissions, a distribution of power between different types of machines using different energy sources, a production rate, and other such parameters. In some instances, the parameters may be input by a user and/or determined based on a desired input. For instance, a machine learning model may determine an achievable target peak maximum power level based on historical data.

At operation 610, the process 600 includes determining a power distribution. The power distribution may include a rate of power consumption as well as a division of power consumption among different machines at the worksite. The distribution of power may include distribution based on types of machines, operations to be performed, energy costs associated with particular machines or operations, desired production rates, s split between fuel and electrical power consumption, and other such distributions. The controller 106 may then control operation of machines at the worksite at operation 612 according to the power distribution to enact the power distribution and meet the energy usage, production, or other targets as defined at the controller 106.

FIG. 7 illustrates a computing system 700 for implementing one or more methods as described herein, according to at least one example. In some examples, other computing systems, such as the controller 106, computing device(s) 112, computing device(s) 116, computing device(s) 140, computing device(s) 402, site controller 500, and other such system may have architectures that are similar to the system architecture shown in FIG. 7. The computing system 700 can include one or more servers or other computing devices that include one or more processor(s) 702, memory 704, and communication interfaces 706.

The processor(s) 702 can operate to perform a variety of functions as set forth herein. The processor(s) 702 can include one or more chips, microprocessors, application specific integrated circuits (ASICs), field programmable gate arrays (FPGAs) and/or other programmable circuits, central processing units (CPUs), graphics processing units (GPUs), digital signal processors (DSPs), and/or other processing units or components known in the art. In some examples, the processor(s) 702 can have one or more arithmetic logic units (ALUs) that perform arithmetic and logical operations, and/or one or more control units (CUs) that extract instructions and stored content from processor cache memory, and executes such instructions by calling on the ALUs during program execution. The processor(s) 702 can also access content and computer-executable instructions stored in the memory 704, and execute such computer-executable instructions.

The memory 704 can be volatile and/or non-volatile computer-readable media such as a non-transitory computer readable medium including integrated or removable memory devices including random-access memory (RAM), read-only memory (ROM), flash memory, a hard drive or other disk drives, a memory card, optical storage, magnetic storage, and/or any other computer-readable media. The computer-readable media can be non-transitory computer-readable media. The computer-readable media can be configured to store computer-executable instructions that can be executed by the processor(s) 702 to perform the operations described herein.

For example, the memory 704 can include a drive unit and/or other elements that include machine-readable media. A machine-readable medium can store one or more sets of instructions, such as software or firmware, which embodies any one or more of the methodologies or functions described herein. The instructions can also reside, completely or at least partially, within the processor(s) 702 and/or communication interfaces 706 during execution thereof by the computing system 700. For example, the processor(s) 702 can possess local memory, which also can store program modules, program data, and/or one or more operating systems.

The memory 704 can store data and/or computer-executable instructions associated with site information 708, energy usage module 710, and a machine control module 712. The site information 708 may include one or more components for storing and maintaining information relating to the worksite such as production targets, assigned machinery, and the like. The energy usage module 710 may include one or more components for determining overall energy usage at the worksite as described herein, for example as described with respect to controller 106. The machine control module 712 may include one or more components for controlling operations of one or more machines at the worksite, for example to control operations based on inputs from the controller 106 describing adjustments to operating parameters based on desired energy usage targets and goals at the worksite, for example as described herein. The memory 704 can also store other modules and data that can be utilized by the computing system 700 to perform or enable performing any action taken by the computing system 700. For example, the other modules and data can include a platform, operating system, and/or applications, as well as data utilized by the platform, operating system, and/or applications.

The communication interfaces 706 can include transceivers, modems, interfaces, antennas, and/or other components that can transmit and/or receive data over networks or other data connections. In some examples, the communication interfaces 706 can be the wireless communication interfaces that the computing system 700 can use to send and receive sensor data, usage data, alerts, and other such information as described herein.

### Industrial Applicability

The present disclosure provides systems and methods for energy tracking and management at worksites such as mining sites and other sites that may include combinations of electrical and fuel-based machinery and more particularly to determining total energy consumption over discrete intervals for use in planning and worksite management. The systems and methods herein provide for determining overall energy usage across electric and fuel-based machines that are stationary and mobile at a worksite to provide a complete and accurate picture of energy consumption. In addition, the energy consumption is provided over discrete time intervals such that energy consumption over a period of minutes may be identified to provide minute-level determinations of variations in energy usage and peak energy usage.

Accordingly, the systems and methods described herein, provide for efficient use of resources and energy and also provides for controlling machine usage and energy consumption to efficiently consume energy with respect to emissions, pricing, and other parameters or metrics. The systems and methods herein enable integration of millions of existing diesel-powered machines into a system for tracking, predicting, and optimizing energy consumption at a site. As electrification of mobile machinery progresses, the systems and methods herein provide for scheduling of charging for batteries and energy storage at the worksite based on monitored and forecast energy usage as well as utility pricing and peak demand and/or energy demand over time.

The interval data for energy usage herein is provided for aggregating electrical and fuel-based energy consumption metrics in a manner that enables adding and accurately reflecting the energy consumption during each interval of time across various machine and infrastructure types. The time interval data enables the systems and methods herein to highlight peak times of day when energy consumption is high, identify patterns or trends in energy consumption, identify key assets that consume energy, optimize time and use of energy consumption, and to combine different energy types to evaluate an overall energy consumption load across the entire worksite. The interval data may further be used for optimizing production at the work site, reducing emissions, increasing reliability, and reducing costs for the work site.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof.

## Claims

1. A system (100) at a worksite comprising:
one or more electrical-powered machines (150);
one or more fuel-powered machines (108);
one or more processors (124); and
a non-transitory computer-readable medium (122) having instruction stored thereon that, when executed by the one or more processors, cause the one or more processors to perform operations comprising:
receiving power data (130) from the one or more electrical-powered machines over a plurality of intervals, the power data (130) associated with a rate of electrical power consumption by the one or more electrical-powered machines (150) over the plurality of intervals;
receiving fuel data (130) from the one or more fuel-powered machines (108) over the plurality of intervals, the fuel data (130) associated with a rate of fuel consumption by the one or more fuel-powered machines (108) over the plurality of intervals;
determining power usage (306) at the worksite over the plurality of intervals by combining the power data (130) and the fuel data (130) for the plurality of intervals;
determining one or more parameters describing distribution of power at the worksite;
determining a power distribution for the worksite based on the power usage and the one or more parameters; and
controlling operation of the one or more electrical-powered machines (150) and the one or more fuel-powered machines (108) based at least in part on the power distribution.

2. The system of claim 1, wherein the operations further comprise:
determining a peak power consumption based on the power usage;
determining a predicted peak power for the worksite at a future interval; and
determining a budget based at least in part on the predicted peak power.

3. The system of claim 1, wherein the one or more parameters comprise at least one of:
a threshold peak power;
a power variation threshold; and
a distribution of power between the one or more electrical-powered machines and the one or more fuel-powered machines.

4. The system of claim 1, wherein controlling operation of the one or more electrical-powered machines (150) and the one or more fuel-powered machines (108) comprises determining to shift operations between the one or more fuel-powered machines (108) and the one or more electrical-powered machines (150) based at least in part on the one or more parameters or the power distribution.

5. The system of claim 1, wherein controlling operation of the one or more electrical-powered machines (150) and the one or more fuel-powered machines (108) comprises changing power consumption by changing operation of one or more machines at the worksite.

6. The system of claim 1, wherein the one or more processors and the non-transitory computer-readable medium are embodied in a controller (106) of the worksite.

7. The system of claim 1, wherein receiving the fuel data further comprises determining a fuel consumption rate (410) by determining a change in fuel on-board the one or more fuel-powered machines (108) over the plurality of intervals.

8. A method (600) comprising:
receiving power data (602) from one or more electrical-powered machines (150) at a worksite over a plurality of intervals, the power data associated with a rate of electrical power consumption by the one or more electrical-powered machines (150) over the plurality of intervals;
receiving fuel data (604) from one or more fuel-powered machines (108) at the worksite over the plurality of intervals, the fuel data associated with a rate of fuel consumption (410) by the one or more fuel-powered machines (108) over the plurality of intervals;
determining power usage (606) at the worksite over the plurality of intervals by combining the power data and the fuel data for the plurality of intervals;
determining one or more parameters (608) describing distribution of power at the worksite;
determining a power distribution (610) for the worksite based on the power usage and the one or more parameters; and
controlling operation (612) of the one or more electrical-powered machines (150) and the one or more fuel-powered machines (108) based at least in part on the power distribution.

9. The method of claim 8, further comprising: wherein the one or more parameters comprise at least one of:
a threshold peak power;
a power variation threshold; and
a distribution of power between the one or more electrical-powered machines and the one or more fuel-powered machines.

10. The method of claim 8, wherein receiving the fuel data further comprises determining a fuel consumption rate (410) by determining a change in fuel on-board the one or more fuel-powered machines (108) over the plurality of intervals.

11. The method of claim 8, wherein receiving the fuel data further comprises determining a fuel consumption rate (410) by determining a fuel flow rate of the one or more fuel-powered machines (108) over the plurality of intervals.

12. The method of claim 8, further comprises:
determining a peak power consumption based on the power usage;
determining a predicted peak power for the worksite at a future interval; and
determining a budget based at least in part on the predicted peak power.

13. The method of claim 8, wherein controlling operation (612) of the one or more electrical-powered machines (150) and the one or more fuel-powered machines (108) comprises determining to shift operations between the one or more fuel-powered machines (108) and the one or more electrical-powered machines (150) based at least in part on the one or more parameters or the power distribution.

14. The method of claim 8, wherein controlling operation of the one or more electrical-powered machines (150) and the one or more fuel-powered machines (108) comprises changing power consumption by changing operation of one or more machines at the worksite.

15. A system (100) comprising:
one or more processors (124); and
a non-transitory computer-readable medium (122) having instruction stored thereon that, when executed by the one or more processors, cause the one or more processors to perform operations comprising:
receiving power data (602) from one or more electrical-powered machines (150) at a worksite over a plurality of intervals, the power data associated with a rate of electrical power consumption by the one or more electrical-powered machines (150) over the plurality of intervals;
receiving fuel data (604) from one or more fuel-powered machines (108) at a worksite over the plurality of intervals, the fuel data associated with a rate of fuel consumption by the one or more fuel-powered machines (108) over the plurality of intervals;
determining power usage (606) at the worksite over the plurality of intervals by combining the power data and the fuel data for the plurality of intervals;
determining one or more parameters (608) describing distribution of power at the worksite;
determining a power distribution (610) for the worksite based on the power usage and the one or more parameters; and
controlling operation (612) of the one or more electrical-powered machines (150) and the one or more fuel-powered machines (108) based at least in part on the power distribution.
